# EUROPEAN PATENT SPECIFICATION

(11) **EP 3 282 111 B1**
(45) Date of publication and mention of the grant of the patent: **01.07.2020**
(21) Application number: 16183853.7
(22) Date of filing: 11.08.2016
(51) Int. Cl.: F02D 19/10, F02D 41/00, F02D 41/06, F02D 19/06, F02B 37/16, F02D 17/02

(54) **METHOD FOR STARTING A GASEOUS FUEL COMBUSTION ENGINE**
VERFAHREN ZUM STARTEN EINES GASFÖRMIGEN BRENNSTOFFVERBRENNUNGSMOTORS
PROCÉDÉ DE DÉMARRAGE D'UN MOTEUR À COMBUSTION DE COMBUSTIBLE GAZEUX

(43) Date of publication of application: 14.02.2018
(73) Proprietor: Caterpillar Motoren GmbH & Co. KG, 24159 Kiel (DE)
(72) Inventor: SIXEL, Eike Joachim, 24109 Kiel (DE); MARSCHEIDER, Hannes, 24790 Schülldorf (DE); CHAKRABARTY, Aradhita Subirkumar, Peterborough PE1 4BD (GB); WESTER, Daniel, 24242 Felde (DE); MOOSER, Dirk, 24223 Raisdorf (DE); STRÜBING, Hannes, 24631 Langwedel (DE); SCHMIDT, Andre, 18147 Rostock (DE); KOSTKOWSKI, Michal, 18055 Rostock (DE)
(74) Representative: BRP Renaud & Partner mbB Rechtsanwälte Patentanwälte Steuerberater

(56) References cited:
- EP-A1- 1 546 532
- EP-A1- 2 136 059
- EP-A1- 2 562 399
- US-A1- 2015 367 830
- US-A1- 2016 032 859

## Description

### Technical Field

The present invention generally relates to gaseous fuel internal combustion engines and methods of operating the same, in particular, to a method of starting a gaseous fuel internal combustion engine.

### Background

Generally, gaseous fuel combustion engines combust a mixture of gaseous fuel and air in a cylinder of the engine. Gaseous fuel combustion engines may comprise, for example, gas engines where a mixture of air and fuel is spark ignited or ignited using a small amount of liquid fuel such as diesel. Similarly, another gaseous fuel combustion engine may be a dual fuel engine operable in a liquid fuel mode and a gaseous fuel mode.

The combustion is characterized by a so-called Lambda value describing an air/fuel ratio, i.e., the ratio of the amount of air in the cylinder to the amount of air required for stoichiometric combustion. During operation of a gaseous fuel combustion engine, the engine may be controlled by controlling, for example, the air/fuel ratio.

Various start procedures for gaseous fuel combustion engines are known. For example, WO 2016/046448 A1 discloses a method for starting up a dual fuel engine.

EP 1 546 532 A0 discloses a method for starting a gaseous fuel internal combustion engine having a plurality of gas admission valves respectively associated with a plurality of cylinders, the method comprises: rotating the engine until a first speed threshold is reached; starting a supply of pilot fuel to the plurality of cylinders after reaching the first threshold to initiate combustion of the pilot fuel and intake air; operating the engine by supplying gaseous fuel to a first number of cylinders via the associated gas admission valves until a second speed threshold above the first speed threshold is reached.

The present invention is directed, at least in part, to improving or overcoming one or more aspects of prior systems.

### Summary of the Disclosure

According to one aspect of the present invention, a method for starting a gaseous fuel internal combustion engine having a plurality of gas admission valves respectively associated with a plurality of cylinders comprises the steps of the method of claim 1.

In another aspect of the present invention, an internal combustion engine comprises the features of claim 12.

In yet another aspect of the present invention, a computer program comprises computer-executable instructions which, when run on a computer, cause the computer to perform the steps of the method of the above aspect.

Other features and aspects of the present invention will be apparent from the following description and the accompanying drawings.

### Brief Description of the Drawings

Fig. 1 is a schematic view of an exemplary internal combustion engine in accordance with the present invention;
Fig. 2 is a schematic view of a control system for implementing a method of starting the internal combustion engine of Fig. 1 in accordance with the present invention; and
Fig. 3 is a graph illustrating the behavior of the engine speed, a rail pressure, a gas admission valve opening duration and a gas pressure during the starting of the engine in accordance with the present invention.

### Detailed Description

The following is a detailed description of exemplary embodiments of the present invention. The exemplary embodiments described herein are intended to teach the principles of the present disclosure, enabling those of ordinary skill in the art to implement and use the present disclosure in many different environments and for many different applications. Therefore, the exemplary embodiments are not intended to be, and should not be considered as a limiting description of the scope of protection. Rather, the scope of protection shall be defined by the appended claims.

The present invention may be based in part on the realization that it may be difficult to start an Otto engine, for example, micro-pilot diesel ignited gas engines or spark-ignited gas engines, as well as dual fuel engines operating in gas mode, with the control algorithms that are used for normal operation of the engine. In particular, the present invention may be based in part on the realization that adaptions and adjustments can be made to improve the start of the engine. For example, the number of fired cylinders may be changed during the start-up phase to achieve a smoother start of the engine. In addition, different air/fuel ratio (AFR) controls can be used to further improve the start-up behavior of the engine. For example, a blow-off valve and a waste gate valve or a variable turbine geometry can be controlled to regulate the supply of intake air during the start of the engine.

The present invention may further be based on the realization that, when a dual fuel engine is started in gas mode, the ignition system of the same has to be tested before activating the gas supply. Further, the proper functioning of the gas admission valves also has to be checked prior to supplying the gaseous fuel to the engine. In particular, cylinder pressure measurements by a pressure measurement system of the engine are used to determine whether the ignition system and the gas admission valves are fully functional.

In addition, the present invention may be based on the realization that, in a first phase of starting the engine, a large amount of power is required to overcome the inertia of the engine and its components in order to start rotating. Therefore, all cylinders of the engine, or a selected number of cylinders, are fired during this first phase. After reaching a speed threshold, less power may be required to accelerate the engine to a desired speed, for example, a rated speed of the engine. Therefore, a smaller number of selected cylinders are fired. This is achieved by closing the gas admission valves of one or more cylinders that are to be skipped. After reaching the desired speed and exceeding a load threshold, an AFR control for normal operation of the engine may be activated, and all cylinders may be fired.

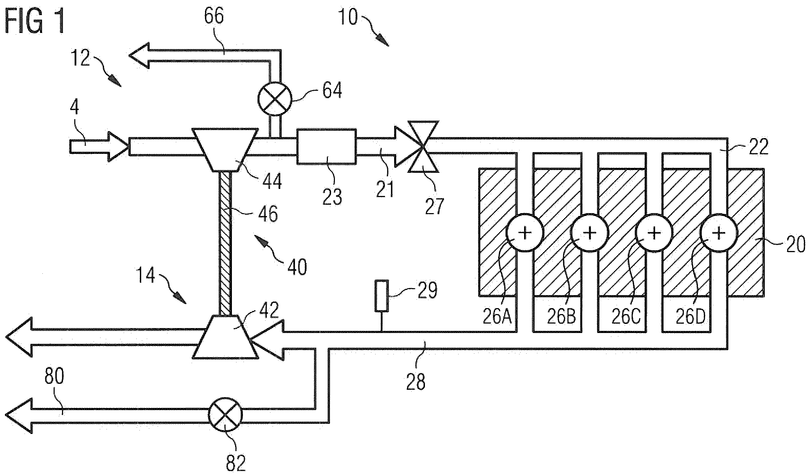

Referring now to the drawings, an exemplary embodiment of an internal combustion engine 10 is illustrated in Fig. 1. Internal combustion engine 10 may include features not shown, such as fuel systems, air systems, cooling systems, peripheries, drive train components, etc. For the purposes of the present disclosure, internal combustion engine 10 is a gas engine. One skilled in the art will recognize, however, that internal combustion engine 10 may be any type of internal combustion engine, for example, a dual fuel engine or any other Otto engine that utilizes, at least temporarily, a mixture of gaseous fuel and air for combustion.

Internal combustion engine 10 may be of any size, with any number of cylinders and in any configuration ("V", "in-line", etc.). Internal combustion engine 10 may be used to power any machine or other device, including ships or other marine applications, locomotive applications, on-highway trucks or vehicles, off-highway machines, earth-moving equipment, generators, aerospace applications, pumps, stationary equipment such as power plants, or other engine-powered applications.

Still referring to Fig. 1, internal combustion engine 10 comprises an engine block 20 including a bank of cylinders 26A-26D, at least one fuel tank (not shown), a turbocharger 40 associated with cylinders 26A-26D, an intake system 12 including an intake manifold 22, and an exhaust system 14.

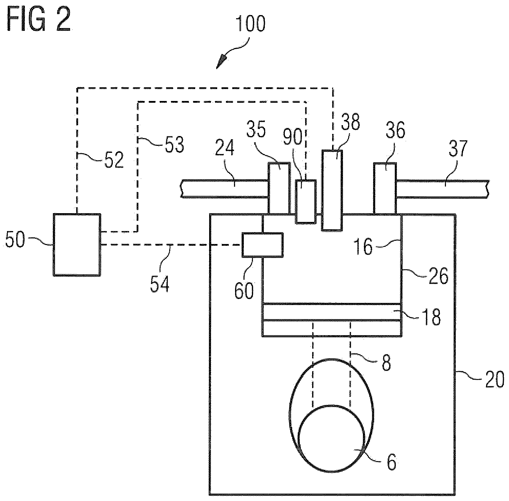

Engine block 20 includes a crank-case (not shown) within which a crank-shaft 6 (see Fig. 2) is supported. Crank-shaft 6 is connected to pistons 18 (see Figs. 2) that are movable within each of cylinders 26A-26D during operation of internal combustion engine 10.

Intake manifold 22 is at least temporarily fluidly connected to each of cylinders 26A-26D. Each of cylinders 26A-26D is provided with at least one inlet valve 35 (see Fig. 2) that is adapted to open or close a fluid connection between an intake passage 24 and a corresponding combustion chamber 16 of cylinders 26A-26D.

An exhaust manifold 28 is connected to each of cylinders 26A-26D. Each of cylinders 26A-26D is provided with at least one exhaust valve 36 disposed in an exhaust passage 37 (see Fig. 2) and being configured to open and close a fluid connection between combustion chamber 16 of each cylinder 26A-26D and exhaust manifold 28.

Generally, when internal combustion engine 10 is operated, a mixture of gaseous fuel and air (in the following referred to as the "mixture") is introduced into the combustion chambers of the plurality of cylinders 26A-26D via an air inlet 4, intake manifold 22 and inlet valves 35, which supply compressed intake air, and gas admission valves 38 (see Fig. 2), which supply gaseous fuel. An air/fuel ratio of the cylinders 26A-26D is controlled by regulating the amount of intake air supplied via intake manifold 22 and/or the amount of gaseous fuel supplied via gas admission valves 38. After combustion, exhaust gases generated by the combustion process are released from cylinders 26A-26D through exhaust manifold 28.

An exhaust sensor 29 may be disposed in exhaust manifold 28 to detect a component of the exhaust from internal combustion engine 10. In the exemplary embodiment described herein, exhaust gas sensor may be a NOx sensor configured to detect an amount of NOx in the exhaust from internal combustion engine 10.

Turbocharger 40 is configured to use the heat and pressure of the exhaust gas of internal combustion engine 10 to drive a compressor 44 for compressing the intake air prior to being supplied to the engine. Specifically, exhaust gas passing a turbine 42 of turbocharger 40 rotates turbine 42, thereby decreasing in pressure and temperature. Compressor 44 is rotatably connected to turbine 42 via a common shaft 46 and driven by turbine 42.

Generally, an outlet of compressor 44 is fluidly connected to an inlet of intake manifold 22 via a compressor connection 21. As shown in Fig. 1, an outlet of compressor 44 is connected to the inlet of intake manifold 22 via a cooler 23. A throttle valve 27 arranged downstream of cooler 23 is configured to open or close the fluid connection between compressor connection 21 and intake manifold 22, thereby enabling or restricting a flow of the compressed intake air from compressor connection 21 into intake manifold 22.

During operation of internal combustion engine 10, the intake air is compressed and cooled before being supplied to cylinders 26A-26D. Within cylinders 26A-26D, further compression and heating of the mixture may be caused by movement of pistons 18 (see Fig. 2). Then, the mixture within the cylinders 26A-26D may be ignited, for example, by using a spark plug or a pilot injection of liquid fuel to initiate the combustion of the mixture at a predetermined ignition timing. The produced exhaust gas is discharged via exhaust manifold 28. An outlet of exhaust manifold 28 is fluidly connected to an inlet of turbine 42. An outlet of turbine 42 may be fluidly connected to, for example, an exhaust gas treatment system (not shown).

Additionally, as indicated in Fig. 1, internal combustion engine 10 is provided with a waste gate system for bypassing turbine 42. The waste gate system includes a waste gate connection 80 and a waste gate valve 82. Alternatively, internal combustion engine 10 may be provided with a variable turbine geometry. Additionally, internal combustion engine 10 may include a blow-off system for discharging intake air downstream of compressor 44 to reduce an intake manifold air pressure. The blow-off system includes a blow-off connection 66 and a blow-off valve 64. It should be appreciated that blow-off connection 66 and blow-off valve 64 may be provided with different configurations than the one shown in Fig. 1, if appropriate. Alternatively, one or more of these components may be omitted.

Turning now to Fig. 2, an exemplary embodiment of a control system 100 for starting the gaseous fuel combustion engine 10 is illustrated. The person skilled in the art will recognize that the exemplary cylinder 26 shown in Fig. 2 demonstrates the principles of the cylinders 26A-26D of Fig. 1. Therefore, the exemplary disclosed configuration shown in Fig. 2 also applies to the cylinders 26A-26D shown in Fig. 1.

Fig. 2 shows a schematic cross-sectional view of cylinder 26. Cylinder 26 defines a combustion chamber 16 and includes a piston 18. Crank-shaft 6 is connected to piston 18 via piston rod 8. Piston 18 is configured to reciprocate within cylinder 26.

Cylinder 26 is connected to intake manifold 22 (Fig. 1) via intake passage 24 and to exhaust manifold 28 via exhaust passage 37. Inlet valve 35 is disposed in intake passage 24, and exhaust valve 36 is disposed in exhaust passage 37. A gas admission valve 38 is provided to supply gaseous fuel to combustion chamber 16 of cylinder 26. In the exemplary embodiment, gas admission valve 38 may be a solenoid-operated gas admission valve. It should be noted that, while Fig. 2 shows gas admission valve 38 being provided to inject gaseous fuel directly into combustion chamber 16, gas admission valve 38 may also be provided in intake passage 24 in association with cylinder 26.

Inlet valve 35 is configured to supply compressed intake air or a mixture of gaseous fuel and air to combustion chamber 16. Exhaust valve 36 is configured to discharge exhaust from combustion chamber 16 to exhaust manifold 28 after combustion.

An ignition device 90 is configured to ignite the mixture of gaseous fuel and air inside combustion chamber 16 at a desired ignition timing. In the embodiment, ignition device 90 is a pilot injector configured to inject a pilot amount of, for example, diesel fuel to ignite the mixture. Further, in other embodiments, a pre-combustion chamber (not shown) may be provided in combustion chamber 16, and ignition device 90 may be a spark plug configured to ignite a pilot amount of gaseous fuel supplied to the pre-combustion chamber in order to initiate combustion of the gaseous fuel and air in combustion chamber 16.

Control system 100 includes a sensor 60 associated with cylinder 26. Sensor 60 may be disposed at least in part within combustion chamber 16. In other exemplary embodiments, sensor 60 may be disposed outside of combustion chamber 16. Sensor 60 is configured to detect a characteristic of the combustion in cylinder 26. In some embodiments, sensor 60 may be a pressure sensor configured to detect a cylinder pressure in cylinder 26. Sensor 60 may be any known pressure sensor and may be configured to detect the pressure within combustion chamber 16 in a known manner.

Control system 100 further includes a control unit 50. Control unit 50 is connected to sensor 60 via a communication line 54 and to gas admission valve 38 via a communication line 52. Control unit 50 is further connected to ignition device 90 via a communication line 53. Control unit 50 is configured to control an ignition timing of the mixture in combustion chamber 16 via ignition device 90. Control unit is also connected to blow-off valve 64 and waste gate valve 82 (see Fig. 1) via further communication lines (not shown). Control unit 50 is configured to control blow-off valve 64 and waste gate valve 82 to adjust an opening area of the same. Further, control unit 50 is configured to receive the results of the detection by sensor 60 and determine at least the characteristic of the combustion in cylinder 26 from the received detection results.

Control unit 50 may be a single microprocessor or dual microprocessors that include means for controlling, among others, an operation of various components of combustion engine 10. Control unit 50 may be a general engine control unit (ECU) capable of controlling internal combustion engine 10 and/or its associated components. Control unit 50 may include all components required to run an application such as, for example, a memory, a secondary storage device, and a processor such as a central processing unit or any other means known in the art for controlling internal combustion engine 10 and its components. Various other known circuits may be associated with control unit 50, including power supply circuitry, signal conditioning circuitry, communication circuitry and other appropriate circuitry. Control unit 50 may analyze and compare received and stored data and, based on instructions and data stored in memory or input by a user, determine whether action is required. For example, control unit 50 may compare received values with the target values stored in memory, and, based on the results of the comparison, transmit signals to one or more components to alter the operation status of the same.

Control unit 50 may include any memory device known in the art for storing data relating to operation of internal combustion engine 10 and its components. The data may be stored in the form of one or more maps or other types of information that describe and/or relate, for example, detection results from a speed sensor (not shown) associated with crank-shaft 6 with different types of controls of engine 10, for example, during the start-up phase of the same, as will be described in more detail below. Each of the maps may be in the form of tables, graphs and/or equations, and may include a compilation of data collected from lab and/or field operation of internal combustion engine 10. The maps may be generated by performing instrumented tests on the operation of internal combustion engine 10 under various operating conditions while varying parameters associated therewith or performing various measurements. Control unit 50 may reference these maps and control operation of one component in response to the desired operation of another component. For example, the maps may contain data on several speed thresholds that are to be used during starting of internal combustion engine 10. In addition, the memory of control unit 50 may include information on desired actuations of blow-off valve 64 and waste gate valve 82 during start-up, for example, based on the current engine speed, the current engine load, etc.

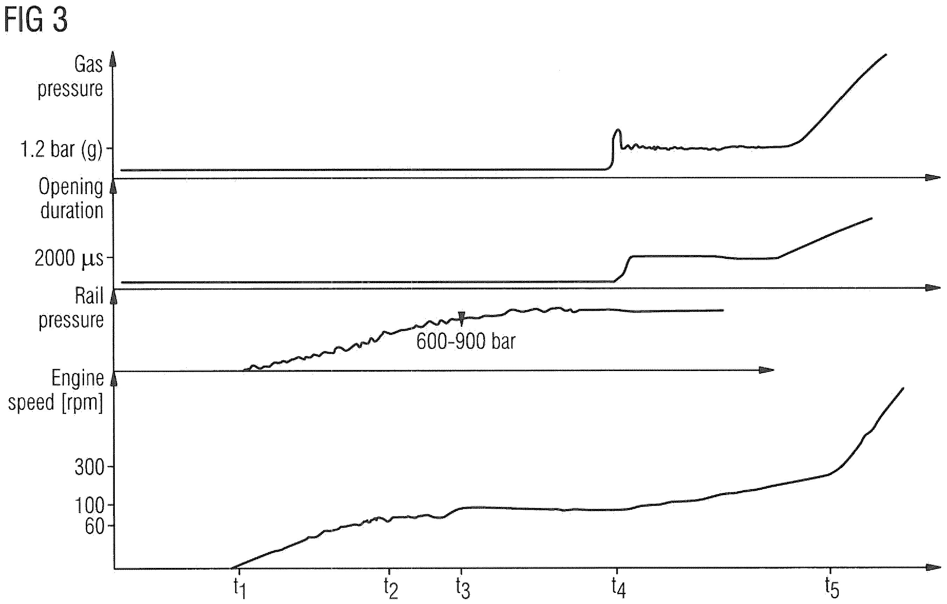

Control unit 50 is configured to control the different components of internal combustion engine 10 during starting of the same. This will be described in more detail with reference to Fig. 3.

In a first phase of the start-up, control unit 50 is configured to prepare combustion engine 10 for starting, for example, by pre-heating one or more components of the same. Further, control unit 50 is configured to activate the gas supply in order to flush the gas pipes of the gas supply system and to remove inert gas from the same.

Next, control unit 50 is configured to activate a start device (not shown) associated with internal combustion engine 10 at timing t₁ in order to start rotating the engine. For example, the start device may be a starter that is operatively connected to crank-shaft 6 and configured to rotate the same. In other embodiments, an air starter system may be used and may be configured to inject compressed air into cylinders 26A-26D of internal combustion engine 10 to start rotating crank-shaft 6. As shown in Fig. 3, this may result in the engine speed increasing. At the same time, a rail pressure of a common rail associated with ignition device 90, i.e. a pilot injector configured to inject a pilot injection of liquid fuel, also increases. The gas pressure at a gas pressure regulating unit (not shown) remains at a low level, for example, about 0.1 bar above atmospheric pressure (bar (g)). The gas system of internal combustion engine 10 remains decompressed without fuel gas.

After reaching a set engine speed using the start device, for example, around 60 rpm, at timing t₂, control unit 50 is configured to start a supply of pilot fuel to the plurality of cylinders 26A-26D in order to initiate the combustion of the pilot fuel and intake air in combustion chamber 16. In this state, control unit 50 may be configured to control blow-off valve 64 and waste gate valve 82 to be in a predetermined first position, for example, to be fully closed in order to achieve the maximum possible intake manifold air pressure and supply the maximum possible amount of intake air to the cylinders. It should be appreciated that, in other embodiments, control unit 50 may control blow-off valve 64 and waste gate valve 82 to have a predetermined opening area in order to achieve a desired intake manifold air pressure during this phase.

Next, at t₃, control unit 50 is configured to perform an ignition health check on the ignition system of internal combustion engine 10. According to the invention, control unit 50 receives cylinder pressure measurements from sensor 60 and determine whether ignition device 90 is functional based on the received cylinder pressure measurements. Other engine related measurement values may also be used, for example, an exhaust gas temperature, but does not form part of the present invention. This check may be performed simultaneously for all cylinders, or in sequence for one or more cylinders at the same time.

In case the ignition health check for all cylinders is passed, control unit 50 then initiates a gas admission valve health test to determine whether all gas admission valves 38 are fully functional. After the ignition health check has been passed, control unit 50 enables the gas supply to the engine and increase the gas pressure to between around 0.1 bar (g) and around 0.5 bar (g), and start operating gas admission valves 38 to accelerate engine 10. During the first phase of operation, control unit 50 receives cylinder pressure measurements from sensor 60 and determine whether gas admission valve 38 is functional based on the received measurements. For example, in case of a stuck valve in an opened position, an increased fuel flow will result in an increased cylinder pressure, which increase when compared to other cylinders with functional gas admission valves can be detected. After the check has been passed, control unit 50 may then increase the gas pressure to the desired value of, for example, between around 0.3 bar (g) and around 1.5 bar (g) (in Fig.4, 1.2 bar (g)) at t₄ and proceed with the start procedure.

After activating the gas supply at t₄, control unit 50 is configured to operate internal combustion engine 10 by supplying gaseous fuel to a first number of selected cylinders via the associated gas admission valves 38. For example, control unit 50 may be configured to supply gaseous fuel to all cylinders 26A-26D of internal combustion engine 10, or to a larger number of said cylinders. As shown in Fig. 3, this results in a further increase of the engine speed. The higher number of cylinders has to be fired to overcome the inertia of internal combustion engine 10 and accelerate the same up to a further speed threshold, for example, a desired low idle speed of internal combustion engine 10.

During this process, for example, upon or prior to reaching the corresponding speed threshold at t₅, control unit 50 will control blow-off valve 64 and waste gate valve 82 (or a lever position for varying a turbine geometry) to have a second predetermined configuration, for example, to be fully open to achieve the minimum possible intake manifold air pressure. It will be appreciated that, in other embodiments, control unit 50 may be configured to set a configuration of blow-off valve 64 and/or waste gate valve 82 that is not a fully opened configuration, as long as it is a configuration where the opening area of the valve is larger than in the first configuration that is used when initiating the pilot injection via ignition device 90.

When the desired engine speed, for example, the low idle speed, is reached at timing t₅, control unit 50 is configured to operate internal combustion engine 10 by supplying gaseous fuel to a second number of selected cylinders via the associated gas admission valves 38. In particular, the second number of selected cylinders is less than the first number of selected cylinders. The reason for this is that less power is required to further increase the engine speed, for example, up to a rated speed of the engine, when the low idle speed has been reached. Therefore, control unit 50 is configured to skip supplying gaseous fuel to a larger number of cylinders, for example, by keeping the associated gas admission valves closed, when the second speed threshold has been reached.

In some embodiments, a closed loop control may be used by control unit 50 for the low load operation of internal combustion engine 10. In particular, an average load of the fired cylinders may be determined, for example, from the measured cylinder pressure of the fired cylinders. If the load decreases below a lower load level, for example, 20 % load, one additional cylinder is skipped to increase the average load. On the other hand, if the average load is above a higher load level, for example, 35% load, one additional cylinder has to be fired to reduce the average load. It will be appreciated that this closed loop control may automatically operate engine 10 with the second (lesser) number of selected cylinders when the engine is accelerated and the cylinder load decreases. Control unit 50 may be configured to perform this closed loop control until a predetermined load threshold is reached. After said load threshold is reached, an air/fuel ratio control during low load operation will be used. In particular, control unit 50 may determine the fuel flow to the fired cylinders to determine a desired intake manifold air pressure. Once the engine is running normally, all cylinders are fired and an appropriate air/fuel ratio control is used.

With the above-described method, control unit 50 can reliably and swiftly start internal combustion engine 10, i.e. increase the speed of the same up to a desired rated speed of, for example, around 500 rpm.

### Industrial Applicability

The industrial applicability of the systems and methods for starting a gaseous fuel combustion engine described herein will be readily appreciated from the foregoing discussion. An exemplary machine suited to the disclosure is a large internal combustion engine such as the engines of the series M46DF, M43DF, GCM46, GCM34, M32DF, M34DF, M27DF, M3x manufactured by Caterpillar Motoren GmbH & Co. KG, Kiel, Germany. For example, for the engines of the series M46DF, the first speed threshold may be around 60 rpm, and the second speed threshold may be around 300 rpm. Further, the rated speed may be around 500 rpm. In addition, the load threshold for the lowest load continuous operation may be around 20%, for example, as low as 15%.

It will be readily appreciated that, although the above-described embodiment relates to a pilot-ignited gas engine, the present teachings can also be applied to other gas engines, for example, dual fuel engines. Likewise, the blow-off valve 64 and the waste gate valve 82 may be controlled by control unit 50 in the manner described above. Therefore, as used herein, the term "pilot fuel" is also intended to cover gaseous fuel that is supplied to a pre-chamber of a spark-ignited gas engine via an appropriate gas supply device that is different from gas admission valve 38.

In some embodiments, control unit 50 may be configured to inject different amounts of pilot liquid fuel prior to reaching the second speed threshold (for example, the low idle speed) and after reaching the same. In particular, the first amount may be greater than the second amount, for example, a maximum possible injection amount of pilot liquid fuel and/or a multi-shot injection of pilot liquid fuel.

It will be appreciated that the foregoing description provides examples of the disclosed systems and methods. However, it is contemplated that other implementations of the invention may differ in detail from the foregoing examples. All references to the invention or examples thereof are intended to reference the particular example being discussed at that point and are not intended to imply any limitation as to the general invention.

Recitation of ranges of values herein are merely intended to serve as a shorthand method for referring individually to each separate value falling within the range, unless otherwise indicated herein, and each separate value is incorporated into the specification as if it were individually recited herein. All method steps described herein can be performed in any suitable order, unless otherwise indicated or clearly contradicted by the context.

Although the preferred embodiments of the present invention have been described herein, improvements and modifications may be incorporated without departing from the scope of the following claims.

## Claims

1. A method for starting a gaseous fuel internal combustion engine (10) having a plurality of gas admission valves (38) respectively associated with a plurality of cylinders (26A-26D), the method comprising:
rotating the engine (10) until a first speed threshold is reached;
starting a supply of pilot fuel to the plurality of cylinders (26A-26D) after reaching the first threshold to initiate combustion of the pilot fuel and intake air;
receiving pressure signals indicating a cylinder pressure in the plurality of cylinders (26A-26B);
determining whether an ignition device (90) associated with each cylinder is functional based on the received cylinder pressure signals;
determining whether the gas admission valves (38) associated with the respective cylinders are functional based on the received cylinder pressure signals;
operating the engine (10) by supplying gaseous fuel to a first number of cylinders (26A-26B) via the associated gas admission valves (38) until a second speed threshold above the first speed threshold is reached; and
operating the engine (10) by supplying gaseous fuel to a second number of cylinders (26A-26B) via the associated gas admission valves (38) after reaching the second speed threshold, the second number of cylinders (26A-26B) being less than the first number of cylinders (26A-26B).

2. The method of claim 1, further comprising:
reducing a supply of intake air to the cylinders (26A-26D) prior to or upon reaching the second speed threshold.

3. The method of claim 2, wherein the internal combustion engine (10) comprises a blow-off valve (64) disposed downstream of a compressor (44) in an intake system (12) of the engine (10) and a waste gate valve (82) disposed upstream of a turbine (42) in an exhaust system (14) of the engine (10) or a variable turbine geometry, the method further comprising:
reducing the supply of intake air to the cylinders (26A-26D) prior to or upon reaching the second speed threshold by increasing an opening area of at least one of the blow-off valve (64) and the waste gate valve (82) and/or by varying the variable turbine geometry.

4. The method of claim 3, further comprising:
operating the engine (10) with the blow-off valve (64) and the waste gate valve (82) being fully closed after reaching the first speed threshold; and
operating the engine (10) with the blow-off valve (64) and the waste gate valve (82) being fully opened prior to or upon reaching the second speed threshold.

5. The method of any one of claims 1 to 4, further comprising:
operating the engine (10) with a closed loop control while operating the engine by supplying gaseous fuel to achieve a desired average cylinder load based on detected loads of the cylinders (26A-26D).

6. The method of claim 5, further comprising:
determining whether a load threshold is reached when the engine (10) is operating above the second speed threshold; and
activating an air/fuel ratio control when the load threshold is exceeded.

7. The method of any one of claims 1 to 6, wherein the engine (10) is a pilot-ignited gas or dual fuel engine, the method including:
supplying a first amount of pilot liquid fuel to the plurality of cylinders (26A-26D) after reaching the first speed threshold to initiate combustion of the pilot liquid fuel and intake air; and
igniting the gaseous fuel supplied to the engine (10) while operating the same with gaseous fuel using an injection of a second amount of pilot liquid fuel.

8. The method of claim 7, wherein the first amount is greater than the second amount, for example, a maximum possible injection amount of pilot liquid fuel and/or a multi-shot injection of pilot liquid fuel.

9. The method of any one of claims 1 to 6, wherein the engine (10) is a spark-ignited gas engine, the pilot fuel being a pilot amount of gaseous fuel supplied to a pre-chamber of each cylinder (26A-26D).

10. The method of any one of claims 1 to 9, further comprising:
pre-heating the engine (10) and starting a gas supply to flush a gas supply system of the engine (10) prior to rotating the engine (10).

11. The method of any one of claims 1 to 10, further comprising:
increasing a gas pressure of the gaseous fuel when starting the supply of gaseous fuel to the cylinders (26A-26D), for example, to around 0.3 to around 1.5 bar (g).

12. An internal combustion engine (10), comprising:
an engine block (20) defining at least in part a plurality of cylinders (26A-26D);
a plurality of gas admission valves (38) respectively associated with the plurality of cylinders (26A-26D);
a start device configured to rotate the engine (10); and
a control unit (50) configured to:
control the start device to rotate the engine (10) until a first speed threshold is reached;
start a supply of pilot fuel to the plurality of cylinders (26A-26D) after reaching the first threshold to initiate combustion of the pilot fuel and intake air;
receive pressure signals indicating a cylinder pressure in the plurality of cylinders (26A-26B);
determine whether an ignition device (90) associated with each cylinder is functional based on the received cylinder pressure signals;
determine whether the gas admission valves (38) associated with the respective cylinders are functional based on the received cylinder pressure signals prior to operating the engine (10) by supplying gaseous fuel to the first number of cylinders (26A-26B);
operate the engine (10) by supplying gaseous fuel to a first number of cylinders (26A-26B) via the associated gas admission valves (38) until a second speed threshold above the first speed threshold is reached; and
operate the engine (10) by supplying gaseous fuel to a second number of cylinders (26A-26B) via the associated gas admission valves (38) after reaching the second speed threshold, the second number of cylinders (26A-26B) being less than the first number of cylinders (26A-26B).

13. A computer program comprising computer-executable instructions which, when run on a computer, cause the computer to perform the steps of the method of any one of claims 1 to 11.

## Patentansprüche

1. Verfahren zum Starten eines Verbrennungsmotors (10) mit gasförmigem Brennstoff, aufweisend eine Vielzahl von Gaseinlassventilen (38), die jeweils einer Vielzahl von Zylindern (26A bis 26D) zugeordnet sind, wobei das Verfahren umfasst:
Drehen des Motors (10), bis ein erster Drehzahlschwellenwert erreicht ist;
Starten einer Zufuhr von Pilotbrennstoff zu der Vielzahl von Zylindern (26A bis 26D) nach Erreichen des ersten Schwellenwerts, um eine Verbrennung des Pilotbrennstoffs und der Ansaugluft zu initiieren;
Empfangen von Drucksignalen, die einen Zylinderdruck in der Vielzahl von Zylindern (26A bis 26B) angeben;
basierend auf den empfangenen Zylinderdrucksignalen Bestimmen, ob eine Zündvorrichtung (90), die jedem Zylinder zugeordnet ist, funktionsfähig ist;
basierend auf den empfangenen Zylinderdrucksignalen Bestimmen, ob die Gaseinlassventile (38), die den jeweiligen Zylindern zugeordnet sind, funktionsfähig sind;
Betreiben des Motors (10) durch Zuführen von gasförmigem Brennstoff zu einer ersten Anzahl von Zylindern (26A bis 26B) über die zugeordneten Gaseinlassventile (38), bis ein zweiter Drehzahlschwellenwert über dem zweiten Drehzahlschwellenwert erreicht ist; und
Betreiben des Motors (10) durch Zuführen von gasförmigem Brennstoff zu einer zweiten Anzahl von Zylindern (26A bis 26B) über die zugeordneten Gaseinlassventile (38) nach Erreichen des zweiten Drehzahlschwellenwerts, wobei die zweite Anzahl von Zylindern (26A bis 26B) geringer als die erste Anzahl von Zylindern (26A bis 26B) ist.

2. Verfahren nach Anspruch 1, ferner umfassend:
Reduzieren einer Zufuhr von Ansaugluft zu den Zylindern (26A bis 26D) vor oder bei Erreichen des zweiten Drehzahlschwellenwerts.

3. Verfahren nach Anspruch 2, wobei der Verbrennungsmotor (10) ein Abblasventil (64), das einem Kompressor (44) in einem Ansaugsystem (12) des Motors (10) nachgeschaltet angeordnet ist, und ein Wastegate-Ventil (82) umfasst, das einer Turbine (42) in einem Abgassystem (14) des Motors (10) oder einer variablen Turbinengeometrie vorgeschaltet angeordnet ist, wobei das Verfahren ferner umfasst:
Reduzieren der Zufuhr von Ansaugluft zu den Zylindern (26A bis 26D) vor oder bei Erreichen des zweiten Drehzahlschwellenwerts durch Vergrößern eines Öffnungsbereichs von mindestens einem des Abblasventils (64) und des Wastegate-Ventils (82) und/oder durch Variieren der variablen Turbinengeometrie.

4. Verfahren nach Anspruch 3, ferner umfassend:
Betreiben des Motors (10), wobei das Abblasventil (64) und das Wastegate-Ventil (82) nach Erreichen des ersten Drehzahlschwellenwerts vollständig geschlossen sind; und
Betreiben des Motors (10), wobei das Abblasventil (64) und das Wastegate-Ventil (82) vor oder bei Erreichen des zweiten Drehzahlschwellenwerts vollständig geöffnet sind.

5. Verfahren nach einem der Ansprüche 1 bis 4, ferner umfassend:
Betreiben des Motors (10) mit einem geschlossenen Regelkreis, während der Motor durch Zuführen von gasförmigem Brennstoff betrieben wird, um eine gewünschte durchschnittliche Zylinderlast basierend auf erfassten Lasten der Zylinder (26A bis 26D) zu erlangen.

6. Verfahren nach Anspruch 5, ferner umfassend:
Bestimmen, ob ein Lastschwellenwert erreicht ist, wenn der Motor (10) über dem zweiten Drehzahlschwellenwert betrieben wird; und
Aktivieren einer Luft/Brennstoff-Verhältnis-Steuerung, wenn der Lastschwellenwert überschritten wird.

7. Verfahren nach einem der Ansprüche 1 bis 6, wobei der Motor (10) eine pilotgezündete Gas- oder Dualbrennstoffmaschine ist, wobei das Verfahren einschließt:
Zuführen einer ersten Menge von Pilotflüssigbrennstoff zu der Vielzahl von Zylindern (26A-26D) nach Erreichen des ersten Drehzahlschwellenwerts, um eine Verbrennung des Pilotflüssigbrennstoffs und der Ansaugluft zu initiieren; und
Zünden des gasförmigen Brennstoffs, der dem Motor (10) zugeführt wurde, während derselbe mit gasförmigem Brennstoff unter Verwendung einer Einspritzung einer zweiten Menge an Pilotflüssigbrennstoff betrieben wird.

8. Verfahren nach Anspruch 7, wobei die erste Menge größer als die zweite Menge ist, zum Beispiel eine maximal mögliche Einspritzmenge von Pilotflüssigbrennstoff und/oder eine Mehrfacheinspritzung von Pilotflüssigbrennstoff.

9. Verfahren nach einem der Ansprüche 1 bis 6, wobei der Motor (10) ein fremdgezündeter Gasmotor ist, wobei der Pilotbrennstoff eine Pilotmenge von gasförmigem Brennstoff ist, der einer Vorkammer jedes Zylinders (26A bis 26D) zugeführt wird.

10. Verfahren nach einem der Ansprüche 1 bis 9, ferner umfassend:
Vorheizen des Motors (10) und Starten einer Gaszufuhr zum Spülen eines Gaszufuhrsystems des Motors (10) vor einem Drehen des Motors (10).

11. Verfahren nach einem der Ansprüche 1 bis 10, ferner umfassend:
Erhöhen eines Gasdrucks des gasförmigen Brennstoffs beim Starten der Zufuhr von gasförmigem Brennstoff zu den Zylindern (26A bis 26D), zum Beispiel auf etwa 0,3 bis etwa 1,5 bar (g).

12. Verbrennungsmotor (10), umfassend:
einen Motorblock (20), der zumindest teilweise eine Vielzahl von Zylindern (26A bis 26D) definiert;
eine Vielzahl von Gaseinlassventilen (38), die jeweils mit der Vielzahl von Zylindern (26A bis 26D) verbunden sind;
eine Startvorrichtung, die dazu konfiguriert ist, den Motor (10) zu drehen; und
eine Steuereinheit (50), die konfiguriert ist zum:
Steuern der Startvorrichtung, um den Motor (10) zu drehen, bis ein erster Drehzahlschwellenwert erreicht ist;
Starten einer Zufuhr von Pilotbrennstoff zu der Vielzahl von Zylindern (26A bis 26D) nach Erreichen des ersten Schwellenwerts, um eine Verbrennung des Pilotbrennstoffs und der Ansaugluft zu initiieren;
Empfangen von Drucksignalen, die einen Zylinderdruck in der Vielzahl von Zylindern (26A bis 26B) angeben;
basierend auf den empfangenen Zylinderdrucksignalen Bestimmen, ob eine Zündvorrichtung (90), die jedem Zylinder zugeordnet ist, funktionsfähig ist;
basierend auf den empfangenen Zylinderdrucksignalen Bestimmen, ob die Gaseinlassventile (38), die den jeweiligen Zylindern zugeordnet sind, funktionsfähig sind, bevor der Motor (10) durch Zuführen von gasförmigem Brennstoff zu der ersten Anzahl von Zylindern (26A bis 26B) betrieben wird;
Betreiben des Motors (10) durch Zuführen von gasförmigem Brennstoff zu einer ersten Anzahl von Zylindern (26A bis 26B) über die zugeordneten Gaseinlassventile (38), bis ein zweiter Drehzahlschwellenwert über dem zweiten Drehzahlschwellenwert erreicht ist; und
Betreiben des Motors (10) durch Zuführen von gasförmigem Brennstoff zu einer zweiten Anzahl von Zylindern (26A bis 26B) über die zugeordneten Gaseinlassventile (38) nach Erreichen des zweiten Drehzahlschwellenwerts, wobei die zweite Anzahl an Zylindern (26A bis 26B) geringer als die erste Anzahl an Zylindern (26A bis 26B) ist.

13. Computerprogramm, umfassend computerausführbare Anweisungen, die, wenn sie auf einem Computer ausgeführt werden, bewirken, dass der Computer die Schritte des Verfahrens nach einem der Ansprüche 1 bis 11 ausführt.

## Revendications

1. Procédé de démarrage d'un moteur à combustion interne de combustible gazeux (10) ayant une pluralité de soupapes d'admission de gaz (38) respectivement associées à une pluralité de cylindres (26A-26D), le procédé comprenant :
la mise en rotation du moteur (10) jusqu'à ce qu'un premier seuil de vitesse soit atteint ;
le démarrage d'une alimentation de combustible pilote vers la pluralité de cylindres (26A-26D) après avoir atteint le premier seuil pour initier la combustion du combustible pilote et de l'air d'admission ;
la réception de signaux de pression indiquant une pression de cylindre dans la pluralité de cylindres (26A-26B) ;
la détermination de si un dispositif d'allumage (90) associé à chaque cylindre est fonctionnel en fonction des signaux de pression de cylindre reçus ;
la détermination de si les soupapes d'admission de gaz (38) associées aux cylindres respectifs sont fonctionnelles en fonction des signaux de pression de cylindre reçus ;
la mise en fonctionnement du moteur (10) en alimentant du combustible gazeux à un premier nombre de cylindres (26A-26B) par l'intermédiaire des soupapes d'admission de gaz (38) associées jusqu'à ce qu'un second seuil de vitesse au-dessus du premier seuil de vitesse soit atteint ; et
la mise en fonctionnement du moteur (10) en alimentant du combustible gazeux à un second nombre de cylindres (26A-26B) par l'intermédiaire des soupapes d'admission de gaz (38) associées après avoir atteint le second seuil de vitesse, le second nombre de cylindres (26A-26B) étant inférieur au premier nombre de cylindres (26A-26B).

2. Procédé selon la revendication 1, comprenant en outre :
la réduction d'une alimentation en air d'admission vers les cylindres (26A-26D) avant ou lors de l'atteinte du second seuil de vitesse.

3. Procédé selon la revendication 2, dans lequel le moteur à combustion interne (10) comprend une soupape d'échappement (64) disposée en aval d'un compresseur (44) dans un système d'admission (12) du moteur (10) et une soupape de décharge (82) disposée en amont d'une turbine (42) dans un système d'échappement (14) du moteur (10) ou une géométrie de turbine variable, le procédé comprenant en outre :
la réduction de l'alimentation d'air d'admission vers les cylindres (26A-26D) avant ou lors de l'atteinte du second seuil de vitesse en augmentant une surface d'ouverture d'au moins l'une de la soupape d'échappement (64) et de la soupape de décharge (82) et/ou en faisant varier la géométrie de turbine variable.

4. Procédé selon la revendication 3, comprenant en outre :
la mise en fonctionnement du moteur (10) avec la soupape d'échappement (64) et la soupape de décharge (82) étant complètement fermée après avoir atteint le premier seuil de vitesse ; et
la mise en fonctionnement du moteur (10) avec la soupape d'échappement (64) et la soupape de décharge (82) étant complètement ouverte avant ou lors de l'atteinte du second seuil de vitesse.

5. Procédé selon l'une quelconque des revendications 1 à 4, comprenant en outre :
la mise en fonctionnement du moteur (10) avec une commande en boucle fermée tout en faisant fonctionner le moteur en alimentant du combustible gazeux pour obtenir une charge de cylindre moyenne souhaitée en fonction de charges détectées des cylindres (26A-26D).

6. Procédé selon la revendication 5, comprenant en outre :
la détermination de si un seuil de charge est atteint lorsque le moteur (10) fonctionne au-dessus du second seuil de vitesse ; et
l'activation d'une commande de rapport air/combustible lorsque le seuil de charge est dépassé.

7. Procédé selon l'une quelconque des revendications 1 à 6, dans lequel le moteur (10) est un gaz à allumage pilote ou un moteur à double combustible, le procédé incluant :
la fourniture d'une première quantité de combustible liquide pilote à la pluralité de cylindres (26A-26D) après avoir atteint le premier seuil de vitesse pour initier la combustion du combustible liquide pilote et de l'air d'admission ; et
l'allumage du combustible gazeux alimenté au moteur (10) tout en faisant fonctionner celui-ci avec du combustible gazeux en utilisant une injection d'une deuxième quantité de combustible liquide pilote.

8. Procédé selon la revendication 7, dans lequel la première quantité est supérieure à la deuxième quantité, par exemple, une quantité d'injection possible maximum de combustible liquide pilote et/ou une injection multiple de combustible liquide pilote.

9. Procédé selon l'une quelconque des revendications 1 à 6, dans lequel le moteur (10) est un moteur à gaz à allumage par étincelle, le combustible pilote étant une quantité pilote de combustible gazeux alimentée à une pré-chambre de chaque cylindre (26A-26D).

10. Procédé selon l'une quelconque des revendications 1 à 9, comprenant en outre :
le préchauffage du moteur (10) et le démarrage d'une alimentation en gaz pour rincer un système d'alimentation en gaz du moteur (10) avant de faire tourner le moteur (10).

11. Procédé selon l'une quelconque des revendications 1 à 10, comprenant en outre :
l'augmentation d'une pression de gaz du combustible gazeux lors du démarrage de l'alimentation de combustible gazeux vers les cylindres (26A-26D), par exemple, à environ 0,3 jusqu'à environ 1,5 bar (g).

12. Moteur à combustion interne (10), comprenant :
un bloc-moteur (20) définissant au moins en partie une pluralité de cylindres (26A-26D) ;
une pluralité de soupapes d'admission de gaz (38) respectivement associées à la pluralité de cylindres (26A-26D) ;
un dispositif de démarrage configuré pour faire tourner le moteur (10) ; et
une unité de commande (50) configurée pour :
commander le dispositif de démarrage pour faire tourner le moteur (10) jusqu'à ce qu'un premier seuil de vitesse soit atteint ;
démarrer une alimentation de combustible pilote vers la pluralité de cylindres (26A-26D) après avoir atteint le premier seuil pour initier la combustion du combustible pilote et de l'air d'admission ;
recevoir des signaux de pression indiquant une pression de cylindre dans la pluralité de cylindres (26A-26B) ;
déterminer si un dispositif d'allumage (90) associé à chaque cylindre est fonctionnel en fonction des signaux de pression de cylindre reçus ;
déterminer si les soupapes d'admission de gaz (38) associées aux cylindres respectifs sont fonctionnelles en fonction des signaux de pression de cylindre reçus avant de faire fonctionner le moteur (10) en alimentant du combustible gazeux au premier nombre de cylindres (26A-26B) ;
faire fonctionner le moteur (10) en alimentant du combustible gazeux à un premier nombre de cylindres (26A-26B) par l'intermédiaire des soupapes d'admission de gaz (38) associées jusqu'à ce qu'un second seuil de vitesse au-dessus du premier seuil de vitesse soit atteint ; et
faire fonctionner le moteur (10) en alimentant du combustible gazeux à un second nombre de cylindres (26A-26B) par l'intermédiaire des soupapes d'admission de gaz (38) associées après avoir atteint le second seuil de vitesse, le second nombre de cylindres (26A-26B) étant inférieur au premier nombre de cylindres (26A-26B).

13. Programme informatique comprenant des instructions exécutables par ordinateur qui, lorsqu'elles sont exécutées sur un ordinateur, amènent l'ordinateur à réaliser les étapes du procédé selon l'une quelconque des revendications 1 à 11.
